# EUROPÄISCHE PATENTANMELDUNG

(11) **EP 1 932 809 A2**
(43) Veröffentlichungstag der Anmeldung: **18.06.2008**
(21) Anmeldenummer: 08003879.7
(22) Anmeldetag: 03.03.2008
(51) Int. Cl.: C02F 9/06, C02F 1/469, C02F 1/461

(54) **Wasserführendes Gerät mit Elektrodialyse-Zelle**

(30) Priorität: 16.04.2007 DE 202007005471 U
(71) Anmelder: V-Zug AG, CH-6301 Zug (CH)
(72) Erfinder: Gau, Ingo, 6317 Oberwil (CH); Piotto Piotto, Andrea, 8050 Zürich (CH); Nesper, Reinhard, 8802 Kilchberg (CH); Strebel, Candid, 6410 Goldau (CH)
(74) Vertreter: Grimm, Siegfried

(57) **Zusammenfassung**

Die Erfindung betrifft wasserführende Geräte, insbesondere Waschmaschinen und Geschirrspüler, dadurch gekennzeichnet, dass die Wasserbehandlungseinheit i) eine Elektrodialyse-Zelle ii) eine Elektrolyse-Zelle iii) eine Synthese-Zelle und ggf. iv) eine Oxidations-Zelle enthält, wobei besagte Elektrolysezelle der Elektrodialyse-Zelle folgt und besagte Synthese-Zelle nicht vor besagter Elektrolyse-Zelle angeordnet ist; ferner betrifft die Erfindung Wasserbehandlungseinheiten enthaltend Elektrodialyse- und Elektrolyse-Zellen angepasst an solche Geräte; Elektrodialyse-Zellen angepasst an solche Geräte und die Verwendung von Elektrodialyse-Zellen in wasserführenden Geräten.

## Beschreibung

Die Erfindung betrifft wasserführende Geräte, insbesondere Waschmaschinen und Geschirrspüler, enthaltend eine Wasserbehandlungseinheit im Wasserzulauf; Wasserbehandlungseinheiten enthaltend Elektrodialyse- und Elektrolyse-Zellen angepasst an solche Geräte; Elektrodialyse-Zellen angepasst an solche Geräte und die Verwendung von Elektrodialyse-Zellen in wasserführenden Geräten.

Die eingesetzte Wasserqualität ist bei wasserführenden Geräten von entscheidender Bedeutung, insbesondere in Bezug auf Haltbarkeit und Wirksamkeit. Generell ist es günstig, salzarmes, Wasser einzusetzen. Dabei ist kalkarmes, "weiches" Wasser von besonderer Bedeutung. Um den negativen Einfluss von salzhaltigem Wasser zu minimieren sind generell zwei Strategien bekannt: die Aufreinigung des eingesetzten Wassers und die Zugabe von Additiven welche den negativen Einfluss des Salzes reduzieren. Ferner ist bekannt, dass durch Elektrolyse des eingesetzten Wassers eine gezielte pH-Verschiebung erreicht werden kann, so dass die Waschwirkung unterstützt wird.

Geschirrspüler ("GS") werden typischerweise mit einem Kationentauscher versehen, welcher Kalzium-Ionen gegen Natrium-Ionen tauscht. Zur Regeneration des Kationentauschers muss der GS mit Kochsalz befüllt werden. Dieses Verfahren wird von Kunden als umständlich betreachtet und belastet zudem die Umwelt. Bei unsachgemässer Regeneration ist mit schlechten Spülergebnissen und oder Defekten am GS zu rechnen.

Bei Waschmaschinen ("WM") setzt man der Wäsche typischerweise Additive (z.B. Phosphate oder Zeolithe) zu, um so eine Komplexierung zu erzielen. Bei hartem Wasser muss eine vergleichsweise hohe Waschmittelmenge dosiert werden um genügend Komplexbildner für eine ausreichende Enthärtung zur Verfügung zu stellen.

WO 2005/087669 offenbart wasserführende Haushaltsgeräte welche mit einer spezifischen, diskontinuierlich arbeitenden Elektrolysezelle versehen sind. Die dort offenbarte Elektrolysezelle soll den Kalkgehalt des eingesetzten Wassers reduzieren.

EP0761156 offenbart einen Geschirrspüler, mit Elektrolysezelle im Wasserzulauf, wobei diese Zelle so konstruiert ist, dass elektrolysiertes Wasser in alkalisches und saures Wasser getrennt wird. Dadurch kann in einem Waschgang zunächst ein saurer und anschliessend ein alkalischer Waschgang zur Verbesserung der Reinigungswirkung vorgesehen werden. Der offenbarte Geschirrspüler ermöglicht jedoch nicht die Reduktion des Salzgehaltes des eingesetzten Waschwassers.

WO2005/11273 offenbart Waschsysteme welche aus einer Wascheinheit und einer Enthärtungseinheit bestehen, wobei die Enthärtungseinheit mittels eines kapazitiven Deionisators oder mittels Nanofiltration arbeitet.

Die bekannten wasserführenden Geräte welche eine Vorrichtung zum Behandeln des Wassers aufweisen werden aufgrund ihrer unkomfortablen Handhabung, und/oder ungenügenden Wirkung und/oder teuren Herstellung und/oder Bildung von Abfallstoffen/Nebenprodukten als ungenügend angesehen.

Ferner sind Elektrodialyse-Zellen bekannt. Solche ED-Zellen werden bspw. bei der Herstellung in der Lebensmittelbranche (Reinigung von Dextranlösungen, Aufbereitung von Molke) und in der Mikroelektronik bei der Reinigung von Abwässern eingesetzt. Diese ED-Zellen sind aufgrund Ihrer Verwendung für den Einsatz in wasserführenden Geräten nicht geeignet.

Es besteht daher ein Bedürfnis, wasserführende Geräte zur Verfügung zu stellen, welche eines oder mehrere der vorstehend genannten Nachteile nicht aufweisen.

Es wird nun ein wasserführendes Gerät gemäss Anspruch 1 beschrieben, dass eines oder mehrere der vorgenannten Probleme löst. Vorteilhafte Ausführungsformen sind in den abhängigen Ansprüchen sowie in der Beschreibung angegeben. Weitere Aspekte der Erfindung sind in den unabhängigen Ansprüchen sowie in der Beschreibung angegeben. Dabei betrifft die Erfindung neben den wasserführenden Geräten ("erster Aspekt"), neuartige Wasserbehandlungseinheiten ("zweiter Aspekt") sowie spezifische Elektrodialyse-Zellen ("dritter Aspekt"). Weiterhin betrifft die Erfindung Verfahren zur Benutzung dieser Vorrichtungen sowie deren Verwendung.

Im Rahmen der vorliegenden Erfindung können die in nachfolgend aufgeführten allgemeinen, bevorzugten und besonders bevorzugten Ausführungsformen, Definitionen und Alternativen beliebig miteinander kombiniert werden und sind Gegenstand der vorliegenden Erfindung. Des Weiteren können einzelne Definitionen / Alternativen entfallen.

Im Rahmen der vorliegenden Erfindung werden die folgenden Begriffe gemäss nachstehenden Definitionen verwendet, sofern sich aus dem konkreten Zusammenhang keine abweichende Bedeutung ergibt. Der Begriff "Wäsche" umfasst gewebte und nicht gewebte textile Materialien, beispielsweise Kleidung, Bettwäsche, Handtücher. Entsprechend ist eine Waschmaschine ("WM") ein Gerät zur Reinigung von Wäsche. Der Begriff "Geschirr" umfasst Gegenstände geeignet zum essen, kochen, servieren; beispielsweise Töpfe, Pfannen, Gläser, Besteck, Tassen, Teller. Entsprechend ist ein Geschirrspüler ("GS") ein Gerät zur Reinigung von Geschirr. Weitere Definitionen sind der Beschreibung zu entnehmen.

Die Erfindung wird weiter verdeutlicht durch die **Figuren**, wobei Fig. 1 den schematischen Aufbau einer ED-Zelle zeigt; Fig. 2 den schematischen Aufbau einer EL-Zelle mit bipolarer Membran zeigt; Fig. 3 den schematischen Aufbau einer kombinierten ED/EL - Zelle zeigt; Fig. 4 den schematischen Aufbau einer kombinierten ED/EL - Zelle mit alternativer Ansteuerung der einzelnen Compartimente zeigt; Fig. 5 verschiede WasserbehandlungsEinheiten zeigt, wobei a) eine ED-Zelle gefolgt von einer EL-Zelle zeigt, b) eine ED-Zelle gefolgt von einer kombinierten ED/EL - Zelle zeigt, c) eine ED-Zelle gefolgt von einer kombinierten ED/EL - Zelle zeigt in welcher die ED/EL-Zelle zusätzlich vom Zulauf gespeist wird; d)eine kombinierte ED/EL - Zelle zeigt; Fig. 6 eine Wasserbehandlungseinheit mit zugeordneter Oxidations-Einheit zeigt; Fig. 7 einen Abstandshalter geeignet für eine erfindungsgemässe ED-Zelle, EL-Zelle, ED/EL-Zelle zeigt; Fig. 8 verschiede WB-Einheiten zeigt, wobei a) eine ED-Zelle gefolgt von einer EL-Zelle zeigt, b) eine ED-Zelle gefolgt von einer kombinierten ED/EL - Zelle zeigt, c) eine ED-Zelle gefolgt von einer kombinierten ED/EL - Zelle zeigt in welcher die ED/EL-Zelle zusätzlich vom Zulauf gespeist wird; d)eine kombinierte ED/EL - Zelle zeigt in denen jeweils eine Syn-Zelle zugeordnet ist; Fig. 9 eine Wasserbehandlungseinheit mit zugeordneter Ox-Zelle und Syn-Zelle zeigt.

Die Erfindung betrifft nun in einem **ersten Aspekt** ein wasserführendes Gerät enthaltend eine Wasserbehandlungseinheit ("WB-Einheit")im Wasserzulauf, dadurch gekennzeichnet, dass die Wasserbehandlungseinheit eine Elektrodialyse-Zelle gefolgt von einer Elektrolyse-Zelle enthält, ggf. eine den vorstehend genannten Zellen zugeordnete Synthese-Zelle enthält und ggf. eine den vorstehenden Zellen zugeordnete Oxidations-Zelle enthält.

Wasserführende Geräte sind allgemein bekannt und betreffen insbesondere elektrisch betriebene Geräte welche warmes Wasser als Arbeitsmedium verwenden; beispielsweise Waschmaschinen (WM), Geschirrspüler (GS), Kondenstrockner, Dampfbügeleisen, Dampfgarer, insbesondere WM und GS. Solche Geräte können für den Hausgebrauch ("Haushaltsgeräte") oder für den gewerblichen Gebrauch ausgelegt sein. Die Erfindung betrifft insbesondere Haushaltsgeräte, bei denen die WB-Einheit im Gerät integriert ist.

Erfindungsgemäss wird die WB-Einheit im Zulauf des wasserführenden Gerätes, und nicht in einem evtl. vorliegenden Wasserkreislauf, integriert. Diese Massnahme erhöht die Lebensdauer der WB-Einheit und gewährleistet optimale Ergebnisse. Generell wurde gefunden, dass sich die Haltbarkeit / Lebensdauer der erfindungsgemässen, wasserführenden Geräte verbessert, verglichen mit entsprechenden Geräten ohne WB-Einheit. Im Fall von GS wird zusätzlich eine erleichterte Bedienung bewirkt, da kein Regeneriersalz, typischerweise Natriumchlorid, nachgefüllt werden muss. Ferner wird bei GS die Umweltverträglichkeit verbessert, da auf den Zusatz von Regeneriersalz verzichtet werden kann. Im Fall von WM kann die Umweltverträglichkeit verbessert werden, da einerseits Waschmittel nur in der für weiches Wasser nötigen geringen Dosierung zugegeben werden muss und andererseits die Spülwassermenge reduziert werden kann.

In einer vorteilhaften Ausführungsform betrifft die Erfindung ein wasserführendes Gerät mit einer WB-Einheit und/oder einer ED-Zelle wie nachfolgend beschrieben.

In einem **zweiten Aspekt** betrifft die Erfindung eine Wasserbehandlungseinheit ("WB-Einheit"), insbesondere eine WB-Einheit angepasst an die Verwendung in einer WM oder in einem GS, umfassend eine Elektrodialyse-Zelle ("ED-Zelle") gefolgt von einer Elektrolyse-Zelle ("EL-Zelle"), einer Synthese-Zelle ("Syn-Zelle") welche der ED-Zelle und / oder der EL-Zelle zugeordnet ist und ggf. eine diesen Zellen zugeordnete Oxidations-Zelle ("Ox-Zelle").

Dabei kann die WB-Einheit im Gehäuse eines wasserführenden Gerätes integriert sein. Alternativ kann die WB-Einheit in einem eigenen Gehäuse integriert sein, welches über die notwendigen Anschlüsse für die wässrigen Ströme, gasförmigen Ströme und elektrischen Leitungen verfügt.

In der WB-Einheit können eine oder mehrere ED-Zellen angeordnet sein. Die Grösse einer ED-Zelle bzw. die Anzahl der ED-Zellen hängen von praktischen Erwägungen, wie Herstellbarkeit, Modularität, technische Anforderungen ab. Solche Variationen sind von der Erfindung umfasst. Ferner können in der WB-Einheit eine oder mehrere EL-Zellen angeordnet sein. Die Grösse einer EL-Zelle bzw. die Anzahl der EL-Zellen hängen von praktischen Erwägungen, wie Herstellbarkeit, Modularität, technische Anforderungen ab. Solche Variationen sind von der Erfindung umfasst. Ferner können in der WB-Einheit eine oder mehrere Ox-Zellen angeordnet sein. Die Grösse einer Ox-Zelle bzw. die Anzahl der Ox-Zellen hängen von praktischen Erwägungen, wie Herstellbarkeit, Modularität, technische Anforderungen ab. Solche Variationen sind von der Erfindung umfasst. Ferner können in der WB-Einheit eine oder mehrere Syn-Zellen angeordnet sein. Die Grösse einer Syn-Zelle bzw. die Anzahl der Syn-Zellen hängen von praktischen Erwägungen, wie Herstellbarkeit, Modularität, technische Anforderungen ab. Solche Variationen sind von der Erfindung umfasst. Sofern nicht explizit angegeben, soll der Verweis auf eine ED-Zelle (bzw. Ox-Zelle usw.) eine oder mehrere ED-Zelle(n) (bzw. Ox-Zelle(n)) mit umfassen.

In einer erfindungsgemässen WB-Einheit erfolgt der Wasserfluss vom Zulauf zur ED-Zelle (den ED-Zellen) wobei ein Konzentrat und eine Diluat-Strom gebildet werden. Der Konzentrat-Strom wird teilweise oder vollständig der EL-Zelle (den EL-Zellen) zugeführt. In der EL-Zelle erfolgt die Bildung eines basischen und eines sauren wässrigen Stroms. Die hier beschriebene relative Anordnung von ED-Zelle und EL-Zelle wird in der vorliegenden Erfindung als "ED-Zelle gefolgt von EL-Zelle" beschrieben.

Nachfolgend sollen die einzelnen Zellen, welche für die erfindungsgemässe WB Einheit geeignet sind, sowie weitere Baugruppen näher beschrieben werden.
1. Elektrodialyse-Zellen ("ED-Zellen"): ED-Zellen sind an sich bekannt und beschreiben solche Baugruppen, welche mit Hilfe mindestens zweier ionenselektiver Membranen und einer angelegten elektrischen Spannung Wasser enthärten. Im Rahmen der vorliegenden Erfindung sind solche Geräte umfasst, deren Wasserbehandlungseinheit die nachstehend beschriebenen erfinderischen ED-Zellen enthält als auch solche welche an sich bekannte ED-Zellen enthält. Der Ausdruck "Wasser enthärten" wird im Rahmen der vorliegenden Erfindung gebraucht, wenn der Gehalt an im Wasser gelösten Mineralien reduziert wird; insbesondere wenn der Gehalt an Kalzium- und Magnesiumkarbonat reduziert wird.
   In einer weiteren vorteilhaften Ausführungsform werden über eine Steuereinheit, z.B. über eine Elektronik, der Stromfluss und die Spannung der ED-Zelle geregelt sowie deren Stofftransport überwacht. Die Erfindung betrifft demzufolge eine ED-Zelle (an sich bekannte ED-Zellen wie auch die nachstehend beschriebenen erfindungsgemässen ED-Zellen) welche zusätzlich eine Steuereinheit aufweist, die einen Strom und/oder eine Spannung durch die bzw. über die Elektroden abhängig von der Wasserhärte des Wasserzuflusses und/oder der Leitfähigkeit des Diluates einstellt. Bei geringer Wasserhärte kann der Stromfluss reduziert, bei hoher Wasserhärte erhöht werden. Auch kann die Grenzstromdichte geregelt werden. Durch Wahl der anzubringenden Stromstärke und/oder Spannung kann die unerwünschte Wasserelektrolyse gering gehalten werden. In einer weiteren vorteilhaften Ausführungsform wird der Dialyseprozess durch Messen des Leitwertes des Diluates geregelt. (Stellgrößen: Spannung und Strom). Die beschriebenen Parameter hängen von Konstruktion und Materialien der ED Zelle und den Betriebsparametern ab und können in einfachen Versuchen optimiert werden.
2. Elektrolyse-Zellen ("EL-Zellen"): EL-Zellen sind an sich bekannt; Im Zusammenhang mit der vorliegenden Erfindung beschreiben EL-Zellen solche Baugruppen, welche mit Hilfe von elektrischem Strom die Spaltung von Wasser in Hydroxid-Ionen (OH-) und Hydronium-Ionen (H+) bewirken. Solche Zellen sind an sich bekannt. Im Rahmen der vorliegenden Erfindung werden bevorzugt solche EL-Zellen verwendet, die über bipolare Membran(en) verfügen.
   In einer vorteilhaften Ausführungsform werden zur der EL-Zelle geringe Mengen eines Elektrolyten, bspw. NaCl, zugeführt. Diese Massnahme verbessert die Wirksamkeit der EL-Zelle, da sie den wässrigen basischen und sauren Strom unterstützen. Dies kann vor allem dann vorteilhaft sein, wenn der Wasserzulauf mit weichem Wasser gespeist wird. Bei dieser Ausführungsform entsteht im basischen Strom NaOH als hauptsächliches Produkt, im sauren HCl.
   In einer weiteren vorteilhaften Ausführungsform werden über eine Steuereinheit, z.B. über eine Elektronik, der Stromfluss und die Spannung der EL-Zelle geregelt sowie deren Stofftransport überwacht. Solche Steuereinheiten sind an sich bekannt.
   In einer weiteren vorteilhaften Ausführungsform werden über eine pH Elektrode der Stromfluss und die Spannung der EL-Zelle geregelt. Solche Anordnungen sind an sich bekannt. Die Erfindung umfasst daher auch EL-Zellen welche eine oder mehrere pH-Elektroden enthält. In einer Ausführungsform betrifft die vorliegende Erfindung daher eine EL Zelle, bei der eine pH-Elektrode im basischen Strom angeordnet ist.
3. Synthese-Zelle ("Syn-Zelle"): Syn-Zellen sind an sich bekannt; Im Zusammenhang mit der vorliegenden Erfindung beschreiben Syn-Zellen solche Baugruppen, welche mit Hilfe von elektrischem Strom aus dem wässrigen Strom des Diluates, Konzentrates oder Zulaufs bleichende Substanzen, insbesondere Peroxid-Verbindungen, herstellen. Syn-Zellen werden erfindungsgemäss im Diluat, Konzentrat und/oder Zulauf der WB-Einheit angeordnet. Syn-Zellen sind an sich bekannt; typischerweise laufen an den Elektroden eine oder mehrere der folgenden Reaktionen ab:

   O₂ + H₂O → O₃ + 2H⁺ (+2.08 V)

   2H₂O → H₂O₂ + 2H⁺ (+1.77 V)

   3 OH⁻ → HO₂⁻ + H₂O (+0.88 V)

   O₂ +2OH⁻→ O₃ + H₂O (+1.24 V)

   2SO₄²⁻→ S₂O₈²⁻ +2e (+1.0V)

   Die Erfindung betrifft daher auch eine WB-Einheit, in welcher bleichende Substanzen, insbesondere O₃, H₂O₂, HO₂⁻, erzeugt werden.
   In einer vorteilhaften Ausführungsform werden Syn-Zellen verwendet, die über Diamantelektroden verfügen. Es wurde überraschend gefunden, das bei der Verwendung solcher Elektroden die unerwünschte Bildung von Wasserstoff signifikant reduziert werden kann, was die Betriebssicherheit erhöht.
   In einer weiteren vorteilhaften Ausführungsform werden Syn-Zellen verwendet, die über Mittel zur Zuführung von sauerstoffhaltigen Gasen zur Elektrode (im Falle von Gleichstrom: zur Anode) verfügen. Es zeigt sich, dass das Einleiten von geringen Mengen Sauerstoff in die Elektrodenräume eine verbesserte Bildung der bleichenden Substanzen bewirkt. Besonders geeignet ist es, Luft zuzuführen.
   In einer weiteren vorteilhaften Ausführungsform ist die Syn-Zelle im Diluat-Stom angeordnet. Dies bewirkt, dass im wesentlichen eine Elektrolyse des Wassers, unter Bildung von erhöhten Mengen an Hydroxylradikalen bzw. H₂O₂, erfolgt.
   In einer weiteren vorteilhaften Ausführungsform ist die Syn-Zelle im Konzentrat-Stom angeordnet. Dies bewirkt, dass vorhandene Sulfate in Peroxodisulfate umgesetzt werden. Diese Anordnung hat den Vorteil, dass bei die Syn-Zelle bei einer vergleichsweise geringeren Überspannung betrieben werden kann, wodurch die Betriebskosten gering gehalten werden und die Wasserstoffbildung reduziert werden kann.
   Im Rahmen der vorliegenden Erfindung ist es auch umfasst, dass mehrere Syn-Zellen in die WB-Einheit integriert werden, z.B eine Syn-Zelle im Diluat-Strom und eine Syn-Zelle im Konzentratstrom. Dadurch wird insgesmat die Menge an bleichenden Verbindungen erhöht und eine bessere Anpassung des Synzelle (Elektrodenmaterial, Spannung usw.) an das zufliessende Medium ermöglicht.
   In einer weiteren vorteilhaften Ausführungsform werden über eine Steuereinheit, z.B. über eine Elektronik, der Stromfluss und die Spannung der Syn-Zelle geregelt sowie deren Stofftransport überwacht. Solche Steuereinheiten sind an sich bekannt.
   In einer weiteren vorteilhaften Ausführungsform werden über eine Sonde, welche das Redoxpotential misst, der Stromfluss und die Spannung der Syn-Zelle geregelt. Solche Anordnungen sind an sich bekannt. Die Erfindung umfasst daher auch Syn-Zellen welche eine oder mehrere Redox-Elektroden enthält. In einer Ausführungsform betrifft die vorliegende Erfindung daher eine Syn-Zelle, bei der eine Redoxelektrode im Anodenraum angeordnet ist.
4. Oxidations-Zellen ("Ox-Zellen"): In einer vorteilhaften Ausführungsform umfasst die WB-Einheit neben einer ED und einer EL-Zelle eine Oxidationszelle, welche mit dem Gasraum der ED- EL- und/oder Syn-Zelle, bevorzugt mit dem Kathodenraum von ED-, EL- und/oder Syn-Zelle, kommuniziert. Als Nebenreaktionen bei Elektrolyse und Elektrodialyse können sich an den Elektrodenräumen Wasserstoff und Sauerstoff bilden. Die Ox-Zelle ist vorgesehen, um die katalytische Umsetzung von gebildetem Wasserstoff und Sauerstoff zu ermöglichen. Solche Zellen sind im Stand der Technik an sich bekannt; eine entsprechende Dimensionierung auf die zu erwartenden Gasmengen ist eine routinemässige Aufgabe für den Fachmann. Besonders geeignet sind Ox-zellen, deren Elektrodenmaterial ausgewählt ist aus der Gruppe umfassend Platinverbindungen, Palladiumverbindungen, platindotierte Metalloxide. Die entsprechende Oxidation von Wasserstoff zu wasser ("kalte Verbrennung") kann bei niedrigen Temperaturen, z.B. bei den Betriebstemperaturen von Wasserführenden Geräten, typischerweise 0 - 100 °C, bevorzugt 15 - 80°C, erfolgen. Der benötigte Sauerstoff kann dabei auch der in der Luft vorhandene Sauerstoff sein. Durch diese zusätzliche Zelle kann die Betriebssicherheit erhöht werden.

In einem **dritten Aspekt** betrifft die Erfindung eine Elektrodialysezelle, insbesondere eine ED-Zelle angepasst an die Verwendung in einer WM oder in einem GS.

Eine ED Zelle weist generell mindestens einen Wasserzulauf ("Zufluss") mindestens einen Wasserablauf für das entsalzte Wasser ("Diluat") und mindestens einen Wasserablauf für das salzreiche Wasser ("Konzentrat") auf. Typischerweise werden ED Zellen so ausgelegt, dass jeweils genau ein Zu/Ablauf für jeden Flüssigkeitsstrom vorliegt. Die einzelnen Ströme können über Stellglieder, bspw. Ventile, gesteuert werden. In einer vorteilhaften Ausführungsform wird die ED-Zelle so betrieben, dass das Verhältnis von Diluat/Konzentrat > 9/1 ist. In einer weiteren vorteilhaften Ausführungsform wird die ED Zelle so betrieben, dass der Zufluss in einem Bereich von 0.5 - 10 l/min liegt. Diese Parameter können mittels geeigneter Stellglieder, z.B. Ventile, realisiert werden. Diese Parameter haben sich im Zusammenhang mit WM und GS als besonders günstig erwiesen.

Ferner weist eine ED Zelle mindestens eine Kathode und eine Anode, bevorzugt eine Kathode und eine Anode, auf. Diese Elektroden können aus an sich bekannten Materialien hergestellt werden, wobei die Elektroden aus dem gleichen oder verschiedenen Materialien gefertigt sind. Geeignete Materialien sind Metalle und Legierungen wie bspw. Edelstahl, aktivierter Titanlegierungen, sowie nichtmetallische Werkstoffe wie bspw. Graphit oder leitfähige Keramikoxide. In einer vorteilhaften Ausführungsform werden die Elektroden dotiert um die Elektrolyseüberspannung zu reduzieren und/oder die Selektivität der Reaktion zu steuern. In einer vorteilhaften Ausführungsform ist die Anode aus Graphit hergestellt. In einer weiteren vorteilhaften Ausführungsform ist die Kathode aus Edelstahl hergestellt. Durch Wahl des Elektrodenmaterials kann die unerwünschte Wasserelektrolyse gering gehalten werden.

Ferner weist eine ED Zelle mindestens eine Anionen- und eine Kationenaustauschermembran auf, wobei die Kationenaustauschermembran (die Membran mit der negativen Oberflächenladung) der Anode zugewandt ist während die Anionenaustauschermembran (die Membran mit der positiven Oberflächenladung) der Kathode zugewandt ist. Solche Membranen sind aus dem Stand der Technik bekannt. Geeignete Kationenaustauschermembranen sind beispielsweise aus polymerene Werkstoffen enthaltend Sulfonsäuregruppen (z.B. PVC Stützgewebe (bspw. 100um) mit Ionenaustauscherfilm (bspw. 10-20um)) aufgebaut. Geeignete Anionenmembranen sind beispielsweise aus polymeren Werkstoffen enthaltend Aminogruppen aufgebaut. Diese ionenselektiven Membranen können so zugeschnitten sein, dass sie ganzflächig auf dem Abstandshalter (s.u.) aufliegen oder lediglich auf der Aussparung durch welche das zu enthärtende Wasser fliesst.

Ferner weist eine erfindungsgemäße ED Zelle Abstandshalter auf, welche zwischen den Membranen und vorteilhaft auch zwischen Membran und Elektrode angeordnet sind. In einer vorteilhaften Ausführungsform werden die Abstandhalter strömungstechnisch so optimiert, dass eine gleichmäßige Strömungsverteilung und so auch eine gleichmäßige Ionenwanderung sichergestellt ist. Vorteilhaft sind die Abstandhalter so ausgebildet, dass sie einen mäanderförmigen Kanal bilden, der mit Zufluss und Diluat - Abfluss kommuniziert und seitlich von der Membran begrenzt ist. Vorteilhaft sind die Abstandhalter ferner so ausgebildet, dass sie universell die Anionenaustauschermembran und Kationenaustauschermembran abtrennen können. Des Weiteren sorgt die Strömung dafür, dass allfällige Gase entfernt werden. In einer vorteilhaften Ausführungsform sind die Abstandshalter in Form einer Platte gefertigt, welche eine S - förmige Aussparung zum Durchströmen des Wassers vom Zuflusses zum Diluat aufweist, wobei der Zufluss von dem einen Ende des "S" gebildet wird während der Diluat - Abfluss das andere Ende des "S" bildet. Das Konzentrat entweicht dabei über die Fläche des "S" und die Membran in die benachbarten Bereiche. Diese Aussparung kann weiterhin Formen annehmen, die einem "S" ähnlich sind, wie bspw. ein "S" mit im Kreis geführten Enden oder ein "S" mit einer zusätzlichen Biegung. Ferner kann der Abstandshalter weitere Aussparungen zur Befestigung und / oder Justage enthalten.

Ferner wird in einer vorteilhaften Ausführungsform eine ED Zelle aus mehreren, bevorzugt 5 - 40, Compartments gebildet, die parallel zueinander zwischen den Elektroden angeordnet sind. Ein ED-Compartment ("Membranstapel") besteht aus einer Diluat- und einer Konzentratkammer: Kationenaustauschermembran, ggf. Abstandshalter, Anionenaustauschermembran, ggf. Abstandshalter, sowie notwendige Zu- und Ableitungen.

In einer weiteren vorteilhaften Ausführungsform werden über eine Steuereinheit, z.B. über eine Elektronik, der Stromfluss und die Spannung geregelt sowie der Stofftransport überwacht. Die Erfindung betrifft demzufolge eine ED-Zelle wie hier beschrieben welche zusätzlich eine Steuereinheit aufweist, die einen Strom und/oder eine Spannung durch die bzw. über die Elektroden abhängig von der Wasserhärte des Wasserzuflusses und/oder der Leitfähigkeit des Diluates einstellt. Bei geringer Wasserhärte kann der Stromfluss reduziert, bei hoher Wasserhärte erhöht werden. Auch kann die Grenzstromdichte geregelt werden. Durch Wahl der anzubringenden Stromstärke und/oder Spannung kann die unerwünschte Wasserelektrolyse gering gehalten werden. In einer weiteren vorteilhaften Ausführungsform wird der Dialyseprozess durch Messen des Leitwertes des Diluates geregelt. (Stellgrößen: Spannung und Strom). Die beschriebenen Parameter hängen von Konstruktion und Materialien der ED Zelle und den Betriebsparamtern ab und können in einfachen Versuchen optimiert werden.

In einem **vierten Aspekt** betrifft die Erfindung die Verwendung von WB-Einheiten wie vorstehend beschrieben in einem wasserführenden Gerät, insbesondere in einer Waschmaschine oder in einem Geschirrspüler sowie die Verwendung einer ED-Zelle wie vorstehend beschrieben in einem wasserführenden Gerät, insbesondere in einer Waschmaschine oder in einem Geschirrspüler.

In einem **fünften Aspekt** betrifft die Erfindung ein Verfahren zum Betreiben einer WM oder eines GS dadurch gekennzeichnet, dass in den verschiedenen Reinigungsschritten unterschiedliche Wasserqualitäten eingesetzt werden. Als Wasserqualität wird einerseits das Zulauf-Wasser, z.B. der öffentlichen Wasserleitung, sowie andererseits das Diluat, das Konzentrat, das basische Wasser, das saure Wasser der WB-Einheit bzw. der ED-Zelle verstanden.

Reinigungsprogramme für GS umfassen typischerweise die Phasen i) Vorspülen, ii) Reinigen, iii) Zwischenspülen, iv) Klarspülen. In einer vorteilhaften Ausführungsform des erfindungsgemässen Verfahrens wird die WB-Einheit in einem Geschirrspüler folgendermassen eingesetzt:
i) Zugabe von unbehandeltem Wasser in die Vorspülphase. Dadurch wird hauptsächlich wasserlöslicher Schmutz entfernt. Vorspülwasser abpumpen.
ii) Zugabe von enthärtetem Wasser (Diluat <lmmol/l der ED-Zelle) in die Reinigungsphase, anschliessend kontinuierliche Zugabe von basischem Wasser (der EL-Zelle) bis zu einem pH-Wert von 11.5. Dadurch wird optimal anhaftender Schmutz zeit- und/oder energiesparend entfernt. Nach Abschluss der Reinigungsphase Wasser abpumpen.
iii) Zugabe von leicht enthärtetem Wasser (<2.0mmol/l) in die Zwischenspülphase. Dadurch werden Schmutz- und Reinigerreste entfernt. Zwischenspülwasser abpumpen.
iv) Zugabe von enthärtetem Wasser (<1.5mmol/l) in die Klarspülphase und kontinuierliche Zugabe von dem sauren Wasser bis pH 3.0. Durch das saure Wasser werden allfällige Kalkrückstände gelöst und abgespült.

Reinigungsprogramme für WM umfassen typischerweise die Phasen i) Hauptwaschgang, ii) Spülen. In einer vorteilhaften Ausführungsform des erfindungsgemässen Verfahrens wird die WB-Einheit in einer Waschmaschine eingesetzt, indem i) im Hauptwaschgang Wasser der ED-Zelle mit einer Wasserhärte von < 1.5 mmol/l verwendet wird und ii) im Spülgang unbehandeltes Wasser verwendet wird. Dadurch wird optimal anhaftender Schmutz zeit- und/oder energiesparend entfernt. Nach den einzelnen Phasen wird das Wasser abgepumpt.

In einer vorteilhaften Ausgestaltung des Verfahrens werden im Reinigungsbad und/oder Klarspülbad das Diluat einer WB-Einheit oder einer ED-Zelle wie vorstehend beschrieben, eingesetzt. Erfindungsgemäss können in allen Waschschritten oder in bestimmten Waschschritten das das Diluat eingesetzt werden. In einer Ausführungsform wird in allen Waschschritten Diluat eingesetzt. In einer alternativen Ausführungsform wird in den besonders kritischen Wasschschritten, insbesondere im Reinigungsbad und/oder Klarspülbad, Diluat eingesetzt.

Die nachfolgenden **Beispiele** sollen die Erfindung weiter erläutern ohne sie einzuschränken.

Beispiel 1: Elektrodialysezelle: Eine ED Zelle mit einer Austauscherfläche von 80cm² und einer Dicke der Abstandhalter von 0.8 mm wird in den Zulauf eines handelsüblichen GS integriert. Die aus Tab.1 ersichtlichen Wasserflüsse und Anschlussspannungen ergeben sich, um das Wasser von 2.5 mmol/l auf 1.0 mmol/l zu enthärten. Der GS konnte ohne Regenerierung betrieben werden.

**Tab. 1**

| Anzahl Stapel | Zellpannung [V] | Durchfluss [l/min] |
|---|---|---|
| 6 | 55 | 0.6 |
| 10 | 85 | 1.0 |
| 16 | 155 | 1.8 |
| 40 | 310 | 3.5 |

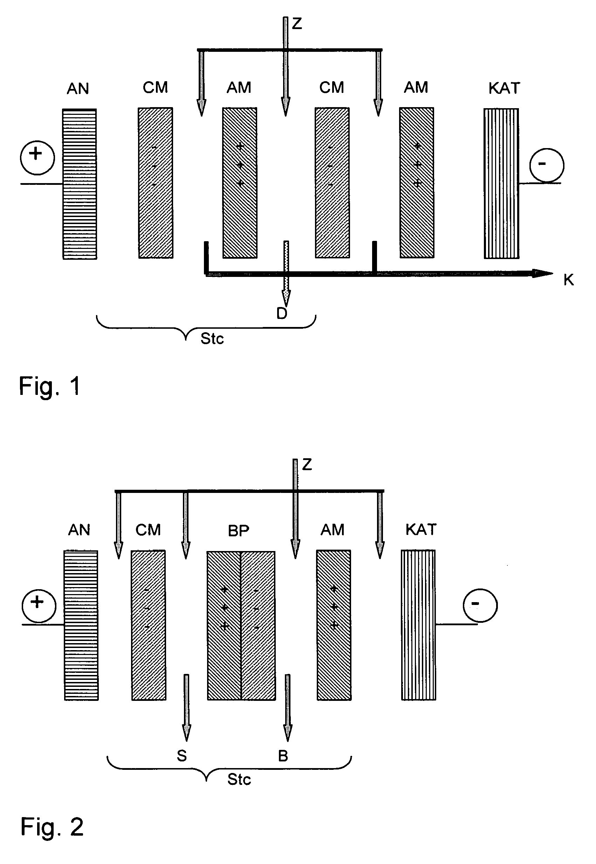

Beispiel 2: Elektrolyse - Zelle: Eine Elektrolysezelle gem. Fig. 2 mit folgenden Parametern in den Wasserzulauf eines handelsüblichen GS integriert: Membranfläche: 80cm2; Abstand zwischen den Membranen: 0.8mm; Wasserfluss: 0.11/min; Feedfluss: 0.11/min 1% NaCl. Lsg.; Anodenmaterial Graphit; Kathodenmaterial Edelstahl. Die gemessenen pH-Werte an den Ausgängen der bipolaren Membran betrugen: 11.3 bzw. 2.9.

Der Zusammenhang zwischen pH-Wert und Reinigungsindex (in Anlehnung an EN 50242)ist in Tab. 2 wiedergegeben.

**Tab.2**

| pH-Wert | Reinigungsindex * |
|---|---|
| 9.8 | 0.97 |
| 10.5 | 1.07 |
| 11.8 | 1.18 |

Durch Erhöhen des pH-Wertes der Waschflotte von 9.8 auf 10.5 verbessert sich der Reinigungseffekt um 10%, wird der pH-Wert bis auf 11.8 erhöht verbessert sich der Reinigungseffekt um 21%. Durch Einstellen des pH-Wertes kann die Programmdauer eines handelsüblichen GS von 80 min auf 55 min unter ansonsten gleichen Bedingungen reduziert werden.

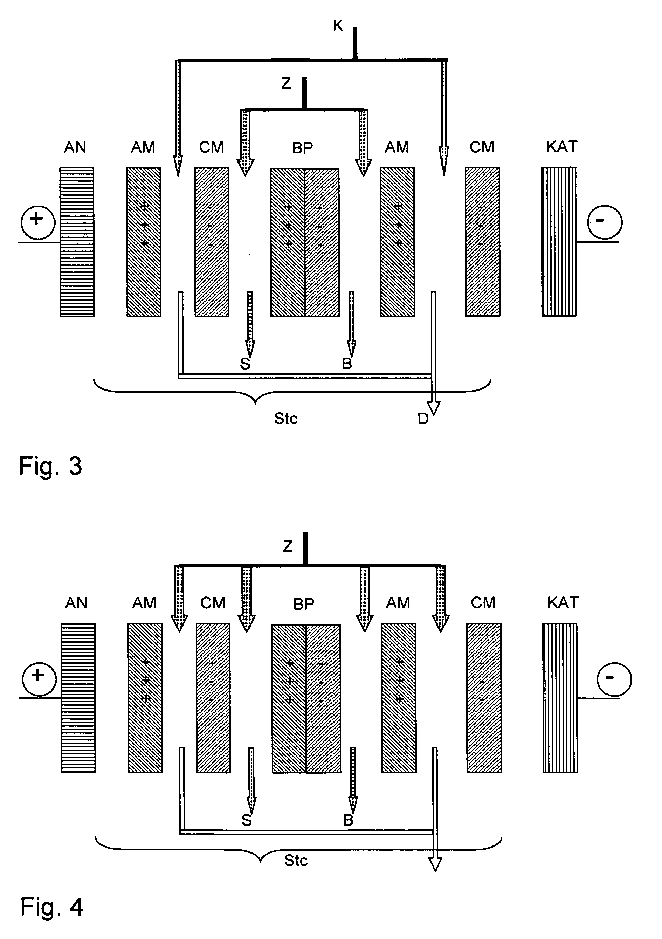

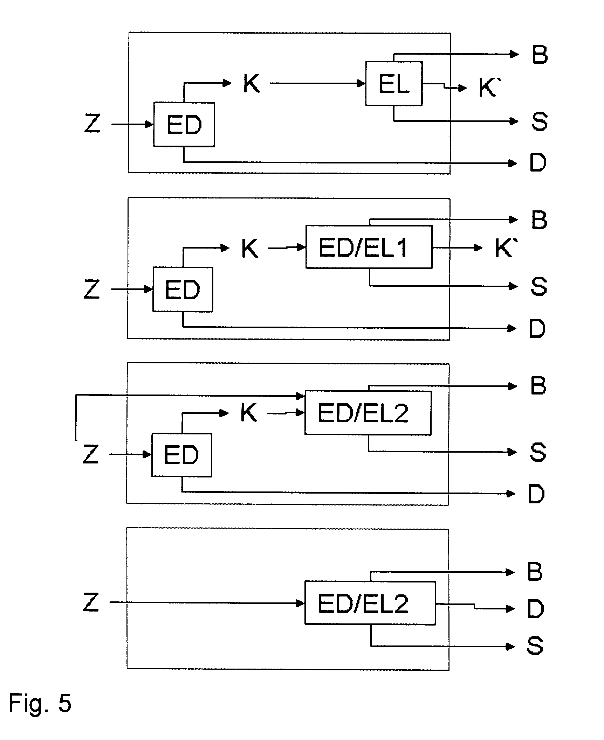

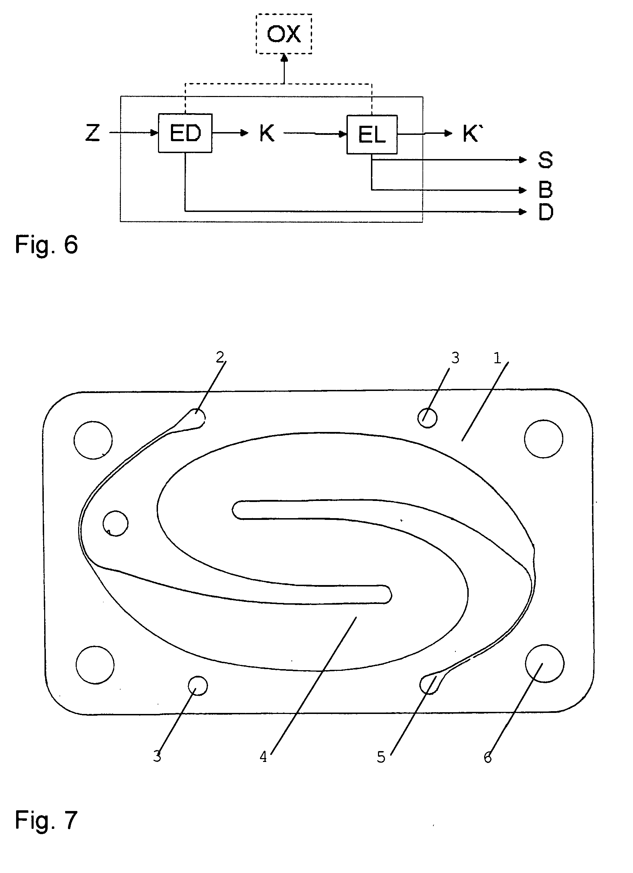

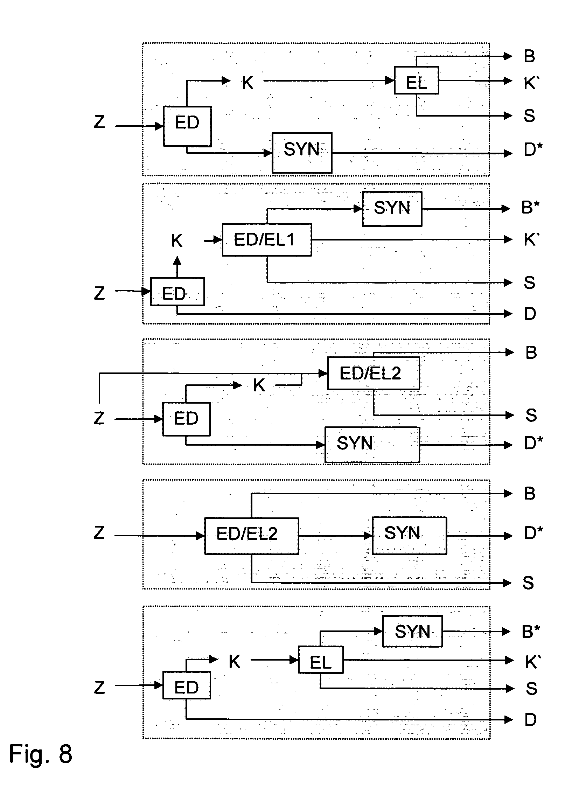

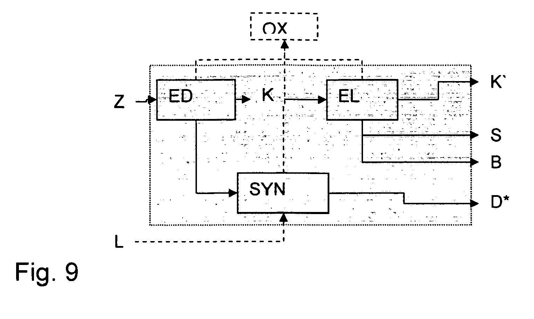

Die nachfolgende **Legende** soll die Figuren weiter erläutern, wobei in Fig. 1 - 6, 8 - 9:
- Z: Zulauf
- K: Konzentrat
- D: Diluat
- B: wässriger basischer Strom
- S: wässriger saurer Strom
- L: Luftzufuhr
- *: mit peroxidischen Verbindungen angereicherter Strom
- CAT: Kathode
- AN: Anode
- CM: kationenselektive Membran
- AM: anionenselektive Membran
- BPM: bipolare Membran
- Stc: Compartment ("stack")
- ED: Elektrodialyse-Zelle
- EL: Elektrolyse-Zelle
- ED/EL: kombinierte ED/EL Zelle
- OX: Oxidationszelle
- SYN: Synthesezelle
bedeutet und in Fig. 7
- 1: Abstandshalter
- 2: Zufluss
- 3: Durchlassbohrungen für Zufluss/Abfluss je nach Einbauweise
- 4: S - förmige Aussparung zum Durchströmen des Wassers
- 5: Diluat - Abfluss
- 6: Positions- und Montagebohrung bedeutet.

## Patentansprüche

1. Wasserführendes Gerät enthaltend eine Wasserbehandlungseinheit im Wasserzulauf, **dadurch gekennzeichnet, dass** die Wasserbehandlungseinheit i) eine Elektrodialyse-Zelle ii) eine Elektrolyse-Zelle iii) eine Synthese-Zelle und ggf. iv) eine Oxidations-Zelle enthält, wobei besagte Elektrolysezelle der Elektrodialyse-Zelle folgt und besagte Synthese-Zelle nicht vor besagter Elektrolyse-Zelle angeordnet ist.

2. Gerät gemäss Anspruch 1, ausgewählt aus der Gruppe Geschirrspülmaschine und Waschmaschine.

3. Wasserbehandlungseinheit umfassend eine Elektrodialyse-Zelle eine Elektrolyse-Zelle, eine Synthese-Zelle und ggf. eine Oxidations-Zelle, wobei besagte Elektrolysezelle der Elektrodialyse-Zelle folgt und besagte Synthese-Zelle nicht vor besagter Elektrolyse-Zelle angeordnet ist.

4. Wasserbehandlungseinheit gemäss Anspruch 3 **dadurch gekennzeichnet, dass** der Wasserzufluss zu dieser Einheit in einem Bereich von 0.5 - 4 1/min liegt.

5. Wasserbehandlungseinheit gemäss Anspruch 3 oder 4, **dadurch gekennzeichnet, dass** bei der ED-Zelle das Verhältnis von Diluat : Konzentrat > 9 : 1 ist.

6. Wasserbehandlungseinheit gemäss einem der Ansprüche 3 - 5, **dadurch gekennzeichnet, dass** bei der ED-Zelle die Elektrodenmaterialien ausgewählt sind aus metallischen Werkstoffen und nichtmetallischen Werkstoffen, insbesondere Edelstahl, aktivierte Titanlegierungen, Graphit, leitfähige Keramikoxide.

7. Wasserbehandlungseinheit gemäss Anspruch 6, **dadurch gekennzeichnet, dass** bei der ED-Zelle die Anode aus Graphit und die Kathode aus Edelstahl besteht.

8. Wasserbehandlungseinheit gemäss einem der Ansprüche 3 - 7 **dadurch gekennzeichnet, dass** bei der ED-Zelle die Kationentauschermembran aus polymeren Werkstoffen enthaltend Sulfonsäuregruppen und/oder die Anionentauschermembran aus polymeren Werkstoffen enthaltend Aminogruppen besteht.

9. Wasserbehandlungseinheit gemäss einem der Ansprüche 3 - 8, **dadurch gekennzeichnet, dass** sie eine Steuereinheit aufweist, welche einen Strom und/oder eine Spannung durch die bzw. über die Elektroden der ED-Zelle und der EL-Zelle abhängig von der Wasserhärte des Wasserzuflusses und/oder der Leitfähigkeit des Diluates einstellt.

10. Elektrodialyse-Zelle enthaltend Abstandshalter zwischen den Membranen, **dadurch gekennzeichnet, dass** die Abstandshalter
a) einen mäanderförmigen Kanal bilden, der mit Zufluss, Diluat - Abfluss kommuniziert und seitlich von der Membran begrenzt ist und
b) in Form einer Platte gefertigt sind, welche eine S - förmige Aussparung zum Durchströmen des Wassers vom Zufluss zum Diluat - Abfluss aufweist und wobei der Zufluss von dem einen Ende des "S" gebildet wird, der Diluat - Abfluss vom anderen Ende des "S" gebildet wird und das Konzentrat über die Fläche des "S" und die daran anliegende Membran in die benachbarten Bereiche entweicht.

11. Elektrodialyse-Zelle gemäss Anspruch 10 - 11 enthaltend 5 - 10 Compartments, wobei jedes Compartment die Elemente Abstandshalter, kationenselektive Membran, Abstandshalter, anionenselektiver Membran umfasst.
